# EUROPÄISCHE PATENTANMELDUNG

(11) **EP 3 570 264 A1**
(43) Veröffentlichungstag der Anmeldung: **20.11.2019**
(21) Anmeldenummer: 19174394.7
(22) Anmeldetag: 14.05.2019
(51) Int. Cl.: G09B 1/06, G09B 1/04, A63F 9/00

(54) **VORRICHTUNG ZUR SPIELERISCHEN LERNUNTERSTÜTZUNG**

(30) Priorität: 15.05.2018 DE 102018004026
(71) Anmelder: Lüth, Rainer, 24864 Brodersby (DE)
(72) Erfinder: Lüth, Rainer, 24864 Brodersby (DE)
(74) Vertreter: Klickow & Wetzel PartGmbB

(57) **Zusammenfassung**

Die erfindungsgemäße Apparatur dient zur spielerischen Lernunterstützung und zum Testen der Fähigkeit von Testperson beispielsweise auf den Gebieten des räumlichen Sehens, der Koordination, der geometrischen und farblichen Wahrnehmung, der Mathematik oder der Rechtschreibung. Die Vorrichtung bietet durch ihren flexiblen Aufbau die Möglichkeit, den Lerngegenstand schnell und einfach zu wechseln und in seiner Komplexität anzupassen. Es sind sowohl Anwendungen im Außenbereich als auch im Innenbereich möglich.

## Beschreibung

Die Erfindung betrifft eine Vorrichtung zur spielerischen Lernunterstützung, die unter anderem dem Erlernen und dem Erfassen des räumlichen Sehvermögens und der räumlichen Koordinationsfähigkeit dienen kann.

Bekannte Vorrichtungen zur Lernunterstützung im Bereich Sehvermögen und Koordinationsfähigkeit sind zum Beispiel in der Gestalt von Steck- und Setzspielzeug für Kleinkinder ausgelegt.

Für Kinder, in einem für Kindergärten und Vorschulen geeigneten Alter, fehlten jedoch bislang geeignete Vorrichtungen zur Lernunterstützung.

Die bekannten Vorrichtungen zur spielerischen Lernunterstützungen sind überwiegend dafür geeignet, im Innenbereich angewendet zu werden und räumlich lokal begrenzte Spielerlebnisse bzw. Lernerlebnisse zu generieren. Es fehlt gemäß dem bislang bekannten Stand der Technik jedoch die Möglichkeit, dauerhaft eine Anwendung im Außenbereich durchführen zu können. Ebenfalls ist es derzeit noch nicht möglich, größere Spielgeräte bereitzustellen, die beispielsweise zur Verwendung im Bereich von Hallen geeignet sind.

Aufgabe der Erfindung ist es, eine Vorrichtung bereitzustellen, um das räumliche Sehvermögen und die räumliche Koordinationsfähigkeit einer Testperson altersunabhängig zu ermitteln und zu trainieren.

Diese Aufgabe wird erfindungsgemäß dadurch gelöst, dass die Vorrichtung es ermöglicht, dass eine Testperson mit Aufgabenstellungen an verschiedenen Positionen in einem durch die Vorrichtung definierten Raum konfrontiert wird.

Diese Anforderungen können unterschiedlicher Komplexität und Art sein. Gedacht ist beispielsweise an das Einsetzen passender Formen in zugehörige Aussparungen oder Halterungen an verschieden Orten innerhalb der Vorrichtung, oder die Zuordnung von Objekten einer Farbe zu entsprechenden Aufnahmeeinrichtungen.

Eine weitere Aufgabe der Erfindung ist es, eine Vorrichtung zur Erreichung einer zusätzlichen Dimension in Lernprozessen zu schaffen, um so einen höheren Lernerfolg zu erreichen.

Gemäß der Erfindung wird diese Aufgabe dadurch gelöst, dass die entsprechenden Funktionalitäten auf verschiedene Orte innerhalb der Vorrichtung aufgeteilt werden. Dabei ist insbesondere an Aufgabenstellungen aus der Mathematik oder der Rechtschreibung gedacht. So können in einer Aufgabenstellung zum Erlernen mathematischer Operationen zum Beispiel die Operanden, der Operator und das Ergebnis in verschiedenen Ebenen angeordnet werden, um dem Gehirn bei der Wiederholung im Lernprozess neue Reize zu bieten.

Gemäß einer Ausführungsform der Erfindung ist es auch möglich, den Lernvorgang mit Bewegung zu verknüpfen.

Diese Option wird erfindungsgemäß dadurch realisiert, dass die verschiedenen Bestandteile des zu erlernenden Stoffes von der lernenden Person eigenhändig an den verschiedenen Orten innerhalb der Vorrichtung angeordnet werden können.

Eine mögliche Ausführungsform der erfindungsgemäßen Vorrichtung zur Lernunterstützung ist es, mehrere Ebenen aus einem Material parallel zueinander in einem definierten Raum zu positionieren. Dieser Raum kann beispielsweise als Würfel ausgeführt sein und ein durch die Kanten des Würfels ausgebildeter Rahmen kann als Träger für die Ebenen dienen. Die Ebenen können zum Beispiel aus Plexiglas gefertigt sein und Aussparungen einer bestimmten Form, passend zu einem zugehörigen Objekt, besitzen. Ziel einer möglichen Übung in dieser Ausführungsform ist es, die Objekte in die jeweils passende Aussparung zu stecken. Dafür muss die Testperson erkennen, in welcher Ebene die zu einem Objekt passende Aussparung liegt und das Objekt dann in die Aussparung stecken. Die Objekte und die zugehörigen Aufnahmen können zum Beispiel durch ihre Formen und/oder Farben einander zugeordnet sein. Somit wird zusätzlich zum räumlichen Sehen und der Koordinationsfähigkeit auch die geometrische und farbliche Wahrnehmungsfähigkeit des Probanden getestet und trainiert.

Eine weitere mögliche erfindungsgemäße Ausführungsform der Lernunterstützung ist es, die verschiedenen Ebenen und die Aussparungen der vorstehend beschriebenen Apparatur in nur zwei räumlichen Dimensionen umzusetzen. Dafür kann ein Material, wie zum Beispiel Papier, genutzt werden, auf dem durch eine Technik, beispielweise Bedrucken, eine perspektivische Darstellung der zuvor im dreidimensionalen Raum positionierten Aufnahmeorte in nur einer Ebene realisiert wird. Aufgabe könnte es für den Anwendungsfall der Lernunterstützung in der Rechtschreibung zum Beispiel sein, gemäß einer Vorlage, die für eine bestimmte Zeit sichtbar ist und mit dem Beginn der Lösung nicht mehr einsehbar ist, einzelne Buchstaben von Worten oder Sätzen den verschiedenen Orten und Ebenen zuzuordnen. Dies könnte durch das Legen von Objekten oder durch das handschriftliche Eintragen erfolgen.

Entgegen dem Stand der Technik kann mit der erfindungsgemäßen Vorrichtung zur Lernunterstützung sowohl die aktuelle Ausprägung des räumlichen Sehens, der räumlichen Koordinationsfähigkeit und der Geschicklichkeit altersunabhängig erfasst und trainiert werden. Des Weiteren ist die erfindungsgemäße Apparatur in bestimmten Ausführungsformen leicht umzukonfigurieren, um exemplarisch neben dem räumlichen Sehen und der Koordinationsfähigkeit auch das Erlernen von mathematischen Operationen oder der Rechtschreibung zu unterstützen.

Als Anwendung wird besonders an den Einsatz mit Kindern zum Beispiel in Vorschulen und Kindergärten zu Test- und Lernzwecken gedacht. Jedoch ist auch eine Nutzung in anderen Altersgruppen und Anwendungsgebieten denkbar. So könnte eine erfindungsgemäße Apparatur auch in der Medizin therapiebegleitend als Test- und Trainingsvorrichtung genutzt werden.

Die erfindungsgemäßen Konstruktionsvarianten unterstützen insbesondere Anwendungen im Außenbereich. Es wird eine hohe Witterungsbeständigkeit bereitgestellt und die bereitgestellte Stabilität ermöglicht eine dauerhafte Funktionsfähigkeit auch bei einer Einwirkung von unsachgemäßen Benutzungshandlungen.

Gemäß ebenfalls bevorzugten Anwendungen ist es möglich, sämtliche Erfindungsvarianten im Bereich von Hallen oder in anderen Innenbereichen zu verwenden.

In den Zeichnungen sind beispielhafte Ausführungsformen der Erfindung schematisch dargestellt. Es zeigen:
- Figur 1: eine perspektivische Darstellung von drei senkrecht aufgestellten Platten, wobei jede der Platten von Rotationsachsen gelagerte Rollen haltert,
- Figur 2: eine Seitenansicht der Vorrichtung gemäß Figur 1,
- Figur 3: eine untere Seitenansicht zur Veranschaulichung der walzenartigen Konstruktion der Rollen,
- Figur 4: eine untere Vorderansicht,
- Figur 5: eine perspektivische Darstellung einer Ausführungsform mit senkrecht angeordneten stabförmigen Trägern,

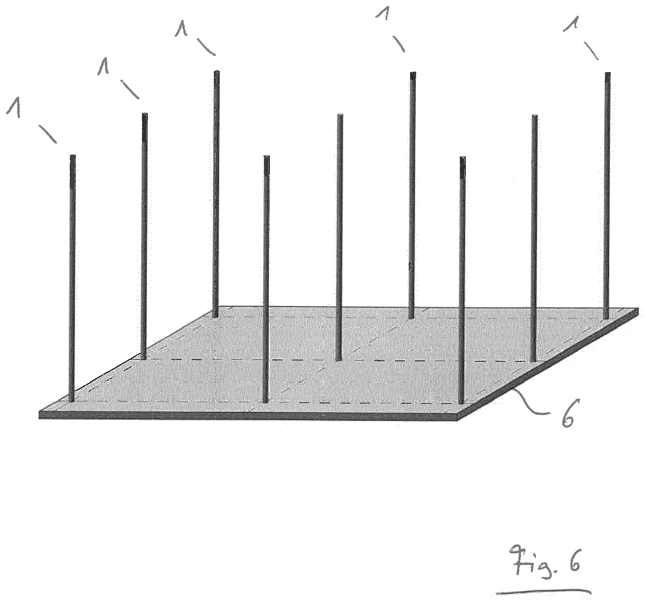

- Figur 6: eine abstrahierte Darstellung entsprechend der Ausführungsform in Figur 5,

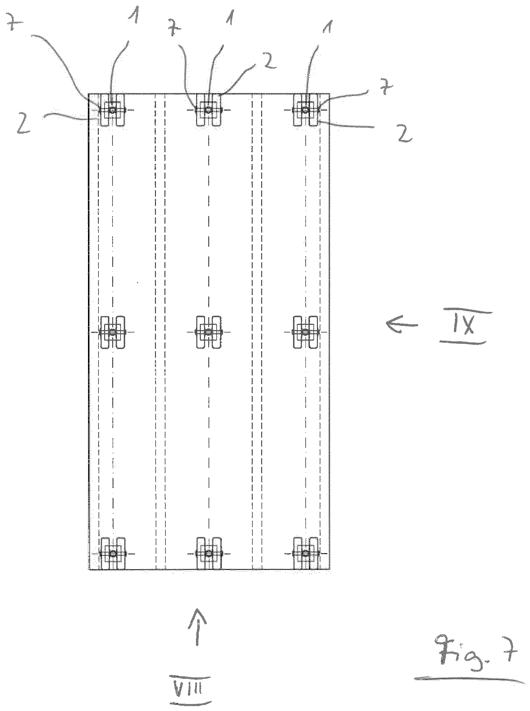

- Figur 7: eine Draufsicht auf eine Anordnung gemäß Figur 6 nach einer Anordnung von rotationsfähigen Rollen an den Trägern,

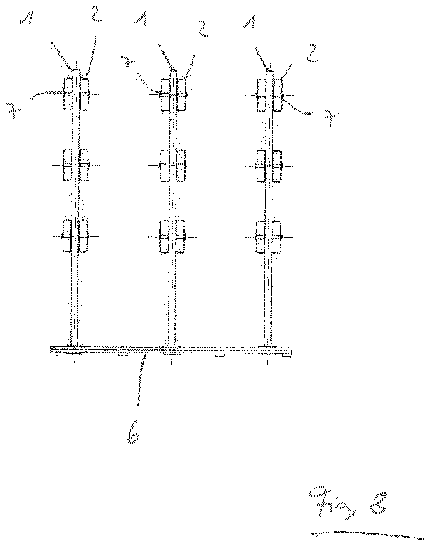

- Figur 8: eine Seitenansicht gemäß Blickrichtung VIII in Figur 7 und

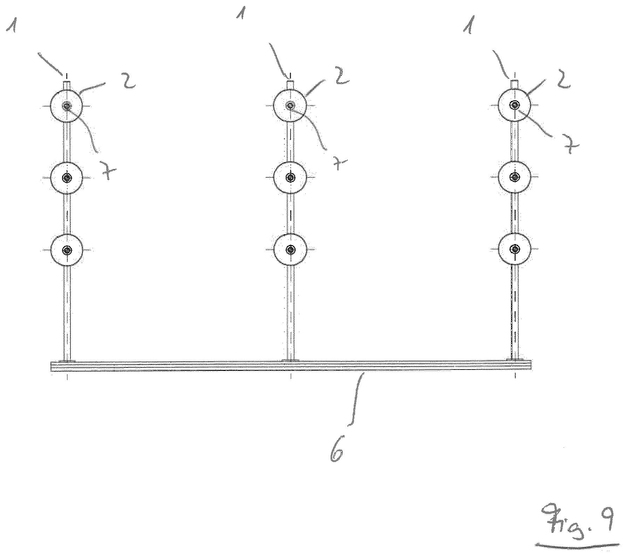

- Figur 9: eine Seitenansicht gemäß Blickrichtung IX in Figur 7.

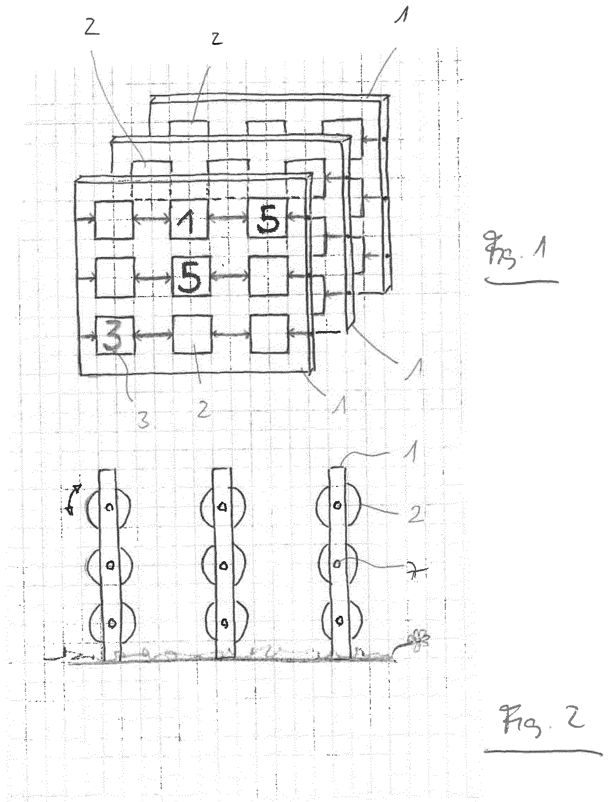

Gemäß der Ausführungsform in Figur 1 sind Tragelemente (1) plattenförmig ausgebildet. Im Bereich der Tragelemente (1) sind eine oder mehrere Rollen (2) rotationsfähig bzw. zumindest drehfähig gelagert. Im Bereich der Rollen (2) sind Motive (3) angeordnet. Die Motive (3) können beispielsweise Zahlen und/oder Buchstaben und/oder Bilder sein. Derartige Motive können beispielsweise auch Bilder von Tieren oder Pflanzen sein.

Aus der Seitenansicht in Figur 2 ist zu erkennen, dass die Rollen (5) im Bereich der Tragelemente (1) von Rotationsachse (7) gehaltert sind. Der Begriff der Rotation umfasst hierbei auch eine Drehbewegung zur Durchführung von unvollständigen Rotationen.

In Figur 1 und Figur 2 ist zu erkennen, dass die Rollen (2) auf unterschiedlichen Höhen im Bereich des Tragelementes (1) montiert sind. Beim dargestellten Ausführungsbeispiel erfolgt eine Anordnung der Rollen (2) auf drei unterschiedlichen Höhen. Ebenfalls sind beim dargestellten Ausführungsbeispiel jeweils drei Rollen (2) nebeneinander angeordnet.

Die Rollen (2) weisen bevorzugt eine zylinderartige Gestaltung bzw. eine walzenartige Gestaltung auf. Ein Durchmesser der Rollen (2) liegt typischerweise in einem Bereich von 10 cm bis 30 cm, bevorzugt ist ein Bereich von 15 cm bis 20 cm.

Zur Positionierung der Rollen (2) weisen die Tragelemente (1) entsprechende Ausnehmungen auf. In jeder der Ausnehmungen kann mindestens eine Rolle (2) angeordnet sein. Gemäß einem Ausführungsbeispiel ist daran gedacht, in jeder der Ausnehmungen eine Rolle (2) oder drei Rollen (2) zu positionieren.

Eine Dimensionierung der Ausnehmungen im Bereich der Tragelemente (1) erfolgt angepasst an den Durchmesser und die Länge der Rollen (2). Bevorzugt erfolgt eine entsprechende Dimensionierung derart, dass zwar ein leichtgängiges Bewegen der Rollen (2) möglich ist, andererseits aber ein Einklemmen von Fingern eines Benutzers sicher vermieden wird.

Zur Unterstützung einer beidseitigen Bespielbarkeit ist es möglich, als Symbole im Bereich der Rollen (2) bevorzugt Kreise, Quadrate und/oder Achtecke anzuordnen. Bei diesen Symbolen ist aufgrund der Symmetrie ein Ablesen sowohl von oben als auch von unten problemlos möglich.

Als Material für die Tragelemente (1) kann bei einer plattenförmigen Ausführungsform beispielsweise Acryl verwendet werden. Insbesondere ist aber auch an einen sandwichartigen Aufbau der Tragelemente (1) gedacht. Eine Dicke der Tragelemente (1) kann bei einer derartigen plattenförmigen Gestaltung in einem Bereich von 10 mm bis 70 mm liegen, bevorzugt in einem Bereich von 25 mm bis 50 mm.

Bei der plattenförmigen Ausführungsform gemäß Figur 1 ist beispielsweise daran gedacht, eine Höhe der Platten von etwa 220 cm vorzusehen. Ein Abstand der beiden äußeren Platten beträgt etwa 220 cm. Dargestellt ist eine Ausführungsform mit drei plattenförmigen Tragelementen (1). Es können aber auch mehr oder weniger Tragelemente (1) verwendet werden. Beim dargestellten Ausführungsbeispiel mit einer Verwendung von drei Platten und einem Abstand der äußeren Platten von etwa 220 cm ergibt sich ein Abstand zwischen den Platten von etwa 110 cm. Dies ermöglicht einen barrierefreien Zugang auch zwischen den Tragelementen (1), so dass eine Benutzung durch Rollstuhlfahrer möglich ist.

Eine Montage der plattenförmigen Tragelemente (1) kann beispielsweise derart erfolgen, dass zunächst ein U-Profil mit den Schenkeln nach oben im Bereich einer Aufstellfläche montiert wird. Das U-Profil kann über Anker im Boden oder in entsprechenden Fundamenten fixiert werden. Für eine sichere Halterung der plattenförmigen Tragelemente (1) ist daran gedacht, die Schenkel des U-Profils etwa 40 cm lang zu gestalten.

Eine Einfassung der plattenförmigen Tragelemente (1) kann über ein U-Profil erfolgen, beispielsweise einem U-Profil aus Aluminium.

Die Ausnehmungen im Bereich der Tragelemente (1) für die Rollen (2) weisen gemäß einem Ausführungsbeispiel eine Breite von 20 cm und eine Höhe von 22 cm auf. Ein unterer Rand der Ausnehmungen befindet sich hierbei auf einer Bauhöhe von etwa 40 cm. Bei einer derartigen Gestaltung beträgt der Abstand zwischen zwei Ausnehmungen im Tragelement (1) in vertikaler Richtung etwa 38 cm. Die vorstehende Dimensionierung ist besonders dafür geeignet, Rollen (2) mit einem Durchmesser von etwa 20 cm aufzunehmen.

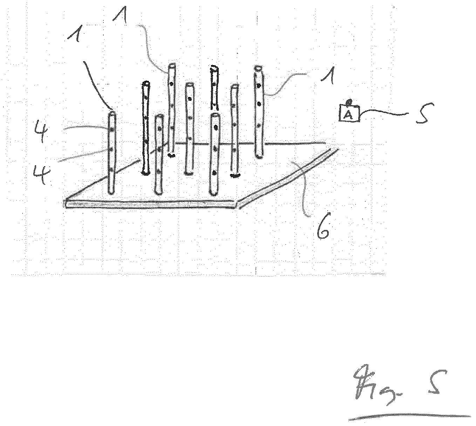

Entlang der Tragelemente (1) sind bei der Ausführungsform gemäß Figur 5 eine Mehrzahl von Haltungselementen (4) angeordnet. Die Haltungselemente (4) sind dafür vorgesehen, Objekte (5) zu haltern und zu positionieren. Die Objekte (5) können beispielsweise plattenartig ausgeführt sein und weisen Kennzeichnungen auf, die beispielsweise als Zahlen und/oder Buchstaben und/oder bildliche Symbole realisiert sein können.

Die Haltungselemente (5) können beispielsweise als Magnete ausgeführt sein. Ebenfalls ist es denkbar, die Haltungselemente als Stifte oder Haken zu realisieren oder in Form von Klettverschlüssen oder Druckknöpfen zu verwenden.

Im Bereich der Objekte (5) sind zu den Halterungselementen (4) korrespondierende Gegenelemente angeordnet. Hierdurch ist es möglich, die Objekte (5) im Bereich der Halterungselemente (4) zu fixieren.

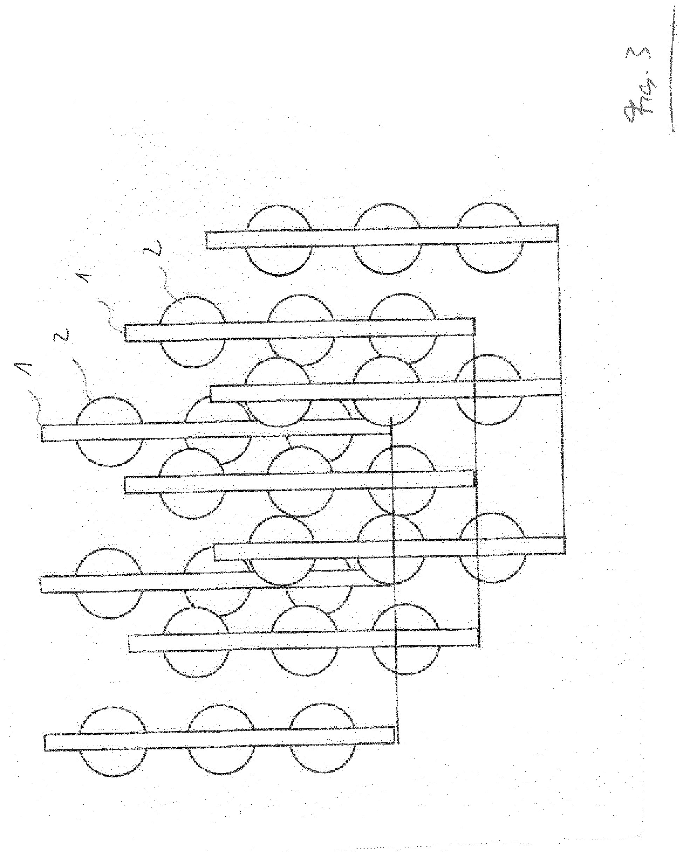

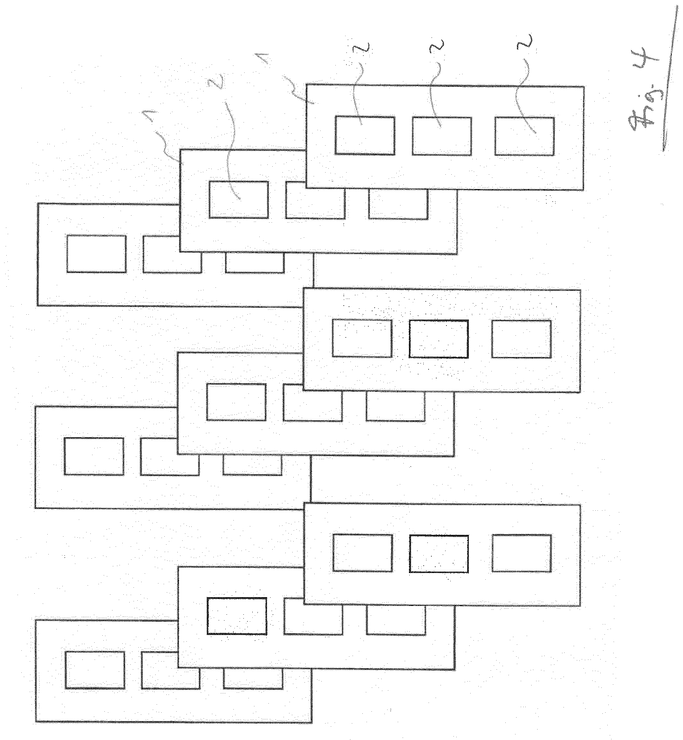

Sowohl die Ausführungsform gemäß Figur 1 bis Figur 4 als auch die Ausführungsform gemäß Figur 5 ermöglichten es, eine Bespielbarkeit von mehreren Seiten zu realisieren. Bei den plattenartigen Ausführungsformen ist eine Bespielung von vorne und hinten möglich. Bei einer rechteckförmigen Gestaltung der Tragelemente (1) gemäß Figur 5 kann beispielsweise eine Bespielbarkeit von vier Seiten realisiert sein. Bevorzugt ist eine quadratische horizontale Querschnittsfläche.

Generell führt die erfindungsgemäße Konstruktion dazu, dass spielerisch eine Mehrzahl von Personen zusammenwirken können. Es wird sowohl die Interaktion zwischen den Personen als auch die Kommunikation gefördert. Eine Anwendung ist sowohl für Kinder als auch für alte Menschen als auch für Personen im Erwachsenenalter möglich.

Hinsichtlich der Dimensionierung kann anwendungsabhängig eine Anpassung an jeweils vorgesehene räumliche Gegebenheiten realisiert werden.

Bei der Ausführungsform gemäß Figur 1 bis Figur 4 ist gemäß einer Realisierungsvariante daran gedacht, einen Abstand der beiden äußeren Tragelemente (1) von etwa 220 cm vorzusehen. Alternativ zu der zeichnerisch dargestellten Verwendung von drei Platten ist es auch möglich, andere Anzahlen von plattenförmigen Tragelementen (1) zu realisieren.

Als Höhe für die Tragelemente (1) ist beim dargestellten Ausführungsbeispiel an etwa 220 cm gedacht.

Gemäß einem Ausführungsbeispiel weisen die Rollen (2) relativ zueinander unterschiedliche Farben auf. Darüber hinaus ist es möglich, dass die Motive (3) relativ zueinander unterschiedliche Farben aufweisen.

Bei der Benutzung der Vorrichtung gemäß Figur 1 bis 4 kann eine Aufgabe für den Benutzer darin bestehen, die Rollen (2) mit den jeweiligen Motiven (3) so innerhalb des Tragelementes (1) zu drehen, dass eine vorgegebene Anordnung generiert wird. Die entsprechende Anordnung kann sich hierbei auf die aus der Blickrichtung des Benutzers sichtbare Farbe der Rollen (2) und/oder das Motiv (3) und/oder die Farbe des Motives (3) beziehen.

Die Ausführungsform gemäß Figur 5 kann in sehr unterschiedlichen Dimensionierungen realisiert werden. Bei einer Halterung der Tragelemente (1) von einer Platte (6) kann die Platte (6) beispielsweise mit einer Dimensionierung von 80 cm x 80 cm realisiert sein. Bei der Verwendung von stabförmigen Tragelementen (1) kann für eine Höhe der Tragelemente (1) ein Bereich von etwa 10 cm bis etwa 250 cm realisiert sein.

Eine Dicke der Platte (6) kann in einem Bereich von 10 mm des 15 mm liegen. Bevorzugt ist die Platte (6) rechteckig, besonders bevorzugt quadratisch, jeweils in einer Draufsicht. Gemäß dem Ausführungsbeispiel in Figur 5 werden neun stabförmige Träger (1) verwendet. Zur Halterung der stabförmigen Tragelemente (1) können im Bereich der Platte (6) Bohrungen angeordnet sein. Diese Bohrungen können bevorzugt mit einem Innengewinde versehen sein. Besonders bevorzugt sind in die Bohrungen Gewindehülsen eingesetzt.

Im Bereich der unteren Enden der stabförmigen Tragelemente (1) sind Gewinde angeordnet, um ein Einschrauben in die Platte (6) zu ermöglichen.

Die Befestigung der Objekte (5) an den Tragelementen (1) bzw. an entsprechenden Pfosten oder Rahmen kann technisch unterschiedlich realisiert werden. Beispielsweise ist es möglich, eine magnetische Halterung vorzunehmen, wobei die Magnete wahlweise im Bereich der Objekte (5) und/oder an den Tragelementen (1) angeordnet werden können. Alternativ ist auch daran gedacht, eine Befestigung durch ein Aufhängen unter Verwendung geeigneter Kontaktelemente durchzuführen. In einem einfachen Ausführungsbeispiel können hierzu Haken und korrespondierende Ausnehmungen verwendet werden.

Darüber hinaus ist auch an die Verwendung von Klettverbindungen oder an die Verwendung von adhäsiven Elementen gedacht.

Alternativ zu den in den Ausführungsbeispielen mehrfach dargestellten Ausführungsformen unter Verwendung von Rollen als Objekt (5) kann auch eine Verwendung von Scheiben erfolgen. Insbesondere ist auch daran gedacht, ein Einstecken derartiger Scheiben im Bereich der Tragelemente (1) im Bereich von an den Tragelementen (1) angeordneten Halterungen zu realisieren.

In den zeichnerisch bzw. dargestellten Ausführungsbeispielen werden jeweils drei Reihen zu jeweils drei pfostenartigen Tragelementen (1) realisiert. Alternativ können beispielsweise auch vier Reihen mit vier Pfosten verwendet werden. Gemäß weiteren Ausführungsbeispielen können durch die Tragelemente (1) auch rechteckförmige Grundstrukturen bereitgestellt werden. Gemäß nochmals weiteren Ausführungsbeispielen könnten die Tragelemente (1) in diversen weiteren Grundmustern angeordnet werden. Beispielsweise ist eine dreieckförmige Grundstruktur, eine trapezförmige Grundstruktur oder eine parallelogrammartige Grundstruktur möglich. Grundsätzlich kann jede die konkret gewählte Aufgabenstellung unterstützende Anordnung der Tragelemente (1) gewählt werden.

Gemäß einer einfachen Grundstruktur werden lediglich drei Tragelemente (1) verwendet, die entweder als Reihe oder als Ecken eines Dreiecks angeordnet sind.

Die erfindungsgemäße Anordnung ermöglicht es gemäß einem Ausführungsbeispiel, ein bekanntes Memoryspiel räumlich zu realisieren und hierdurch dem Spiel eine dreidimensionale Komponente zu verleihen.

Wie bereits erwähnt, können alternativ zu den in den Ausführungsbeispielen dargestellten Rollen (2) auch hängende Scheiben, stehende Scheiben oder Tafeln bzw. andere plattenartige Elemente als Objekte (5) verwendet werden.

Gemäß einem weiteren Ausführungsbeispiel kann die erfindungsgemäße Konstruktion für Anwendungen im Bereich des Unterrichtes an Schulen oder anderen Einrichtungen zur Vermittlung von Lernstoff erfolgen. Beispielsweise bei einer Anwendung im Chemieunterricht kann die erfindungsgemäße Anordnung zur Veranschaulichung des Periodensystems der chemischen Elemente verwendet werden. Beispielsweise wäre es hierbei möglich, über die Motive (3) an den Objekten (5) Daten der einzelnen chemischen Elemente zu vermitteln. Im Hinblick auf das chemische Element Wasserstoff kann dies beispielsweise das Wort "Wasserstoff, die Abkürzung "H" sowie die Ziffer "1" sein. In entsprechender Weise können dann auch die anderen chemischen Elemente berücksichtigt werden.

## Patentansprüche

1. Vorrichtung zur spielerischen Lernunterstützung, bei der im Bereich mindestens eines Tragelementes (1) mindestens ein Objekt (5) positioniert ist, wobei im Bereich des Objektes (5) mindestens ein Motiv (3) angeordnet ist.

2. Vorrichtung nach Anspruch 1, **dadurch kennzeichnet, dass** das Tragelement (1) plattenförmig ausgebildet ist.

3. Vorrichtung nach Anspruch 1, **dadurch gekennzeichnet, dass** das Tragelement (1) stabförmig ausgebildet ist.

4. Vorrichtung nach Anspruch 1 oder 2, **dadurch gekennzeichnet, dass** das Tragelement (2) mindestens eine bewegliche Rolle (2) haltert.

5. Vorrichtung nach einem der Ansprüche 1 bis 4, **dadurch gekennzeichnet, dass** eine Ausbildung für Außenanwendungen realisiert ist.

6. Vorrichtung nach einem der Ansprüche 1 bis 4, **dadurch gekennzeichnet, dass** eine Ausbildung für Innenanwendungen realisiert ist.

7. Vorrichtung nach einem der Ansprüche 1 bis 6, **dadurch gekennzeichnet, dass** eine mindestens zweiseitige Zugänglichkeit realisiert ist.

8. Vorrichtung nach einem der Ansprüche 1 oder 4, **dadurch gekennzeichnet, dass** die Rollen (2) auf mindestens zwei unterschiedlichen Ebenen angeordnet sind.

9. Vorrichtung nach Anspruch 4, **dadurch gekennzeichnet, dass** in einer Ausnehmung des Tragelementes (1) mindestens zwei Rollen (2) angeordnet sind.

10. Vorrichtung Anspruch 1, **dadurch gekennzeichnet, dass** das Tragelement (1) im Bereich einer Aufstellfläche verankert ist.

11. Vorrichtung nach einem der Ansprüche 1 bis 10, **dadurch gekennzeichnet, dass** eine Mehrzahl von Tragelementen (1) von einer Platte (6) gehaltert ist.

12. Vorrichtung nach einem der Ansprüche 1 bis 3, **dadurch gekennzeichnet, dass** das Tragelement (2) mindestens eine positionierbare Scheibe haltert.

13. Vorrichtung nach einem der Ansprüche 1 bis 3, **dadurch gekennzeichnet, dass** das Tragelement (2) mindestens ein positionierbares plattenförmiges Objekt haltert.

14. Vorrichtung nach einem der Ansprüche 1 bis 13, **dadurch gekennzeichnet, dass** das Objekt (5) vom Tragelement (1) trennbar angeordnet ist.

15. Vorrichtung nach einem der Ansprüche 1 bis 14, **dadurch gekennzeichnet, dass** mindestens zwei Tragelemente (1) mindestens zwei Objekte (5) in einer dreidimensionalen Anordnung positionieren.
